(19) **Europäisches Patentamt / European Patent Office / Office européen des brevets**

(11) **EP 0 986 736 B1**

(12) **EUROPEAN PATENT SPECIFICATION**

(45) Date of publication and mention
of the grant of the patent:
**24.02.2010 Bulletin 2010/08**

(51) Int Cl.:
**G01C 17/28** (2006.01)　　**G01C 17/38** (2006.01)
**G01C 19/00** (2006.01)　　**G01C 19/38** (2006.01)
**G01C 21/08** (2006.01)　　**G01C 21/16** (2006.01)

(21) Application number: **99916892.5**

(22) Date of filing: **25.03.1999**

(86) International application number:
**PCT/EP1999/002034**

(87) International publication number:
**WO 1999/050619 (07.10.1999 Gazette 1999/40)**

(54) **INERTIAL AND MAGNETIC SENSORS SYSTEMS DESIGNED FOR MEASURING THE HEADING ANGLE WITH RESPECT TO THE NORTH TERRESTRIAL POLE**

INERTIAL- UND MAGNETSENSORSYSTEME ZUR MESSUNG DES KURSWINKELS GEGENÜBER NORD

SYSTEMES DE DECTECTEURS INERTIELS ET MAGNETIQUES CON US POUR MESURER L'ANGLE DE CAP PAR RAPPORT AU POLE TERRESTRE NORD

(84) Designated Contracting States:
**BE DE DK ES FI FR GB GR IT NL PT SE**

(30) Priority: **01.04.1998 IT RM980208**

(43) Date of publication of application:
**22.03.2000 Bulletin 2000/12**

(73) Proprietor: **Alenia Marconi Systems S.p.A.**
**00131 Roma (IT)**

(72) Inventors:
• **CECCHERINI, Carlo**
**I-16100 Genova (IT)**

• **SCARPA, Stefano**
**I-16100 Genova (IT)**

(74) Representative: **Gustorf, Gerhard**
**Bachstraße 6a**
**D-84036 Landshut (DE)**

(56) References cited:
**US-A- 4 870 602　　US-A- 4 945 647**
**US-A- 5 075 693**

**Description**

Technical Field

The invention described here concerns a heading system of distributed design consisting of: at least two sensor units capable of determining the north earth's magnetic pole direction; at least one sensor unit capable of determining the position with respect to both the north terrestrial magnetic pole direction and the north geographic pole direction at the same time; and the capability of compensating any errors, arising from unpredictable variations in the local earth's magnetic field, affecting all sensor units in said system.

The present invention can be classified in the technical field of measuring instruments, in particular those for measuring heading angles. The application field of this invention consists primarily in measuring the heading angle of sea-surface or underwater systems of distributed design such as sea buoys, underwater vessels and towed sensor arrays.

This invention, however, can also be applied to groups of land vehicles, the positions of which, with respect to a fixed reference system, must be determined as a function of time.

Background Art

At present, when it is not possible to operate with the Global Positioning System (GPS), use is made both of inertial systems and magnetic systems, with a preference for the latter when space restrictions exist; mixed systems (limited to single sensor units) are sometime used for compensating any gyroscopic drift (built-in in inertial systems) through gimbal-mounted magnetic compasses or magnetic strap-down systems.

However, the above mentioned systems (GPS, inertial and magnetic) have not yet been found suitable for uses where the global system space requirements were a decisive factor in the fulfilment of the requested functions, and, in particular, for the above stated functions (measurement of heading angles for each sensor with reference to the earth's north geographic pole).

In addition, the costs of standard full-inertial systems were so high that their use did not result economically convenient.

US-A-5 075 693 describes a navigation system using a magnetometer with computer based declination correction, a gyroscope and GPS for providing heading information. From US-A-4 870 602 a navigation system is known using an automatically calibrated magnetometer and an inertial reference unit. US-A- 4 945 647 discloses a north finding system using a ring laser gyro and accelerometers.

Disclosure of Invention

The invention described in this patent application does not suffer from such limitations, since it is based on the concept of designing and installing, in the global system, a sensor unit capable of determining its own heading angle with respect to two vectors (earth's angular speed and earth's magnetic field), which are independent one of the other.

The system forming the subject of this invention includes:

a) a plurality of magnetic/inertial sensor units capable of measuring the heading angle $\theta_m{}^k$ (k means the k-th sensor unit) of these sensor units with respect to the north terrestrial magnetic pole:

b) a mixed sensor unit capable of measuring both its angle $\theta_m{}^*$ with respect to the magnetic north and angle $\theta_g{}^*$ with respect to the geographic north, where these angles are obtained from a magnetic/inertial sensing sub-assembly $(\theta_m{}^*)$, and one completely inertial sensing sub-assembly $(\theta_g{}^*)$, one integral with the other, and in reciprocal alignment;

c) a method for compensating for errors arising from unpredictable variations occurred locally in the earth's magnetic field and affecting the heading angles measured by all magnetic/inertial sensor units.

Sensor units mentioned under (a) and (b) above may be mounted either fixedly or on a gimbal and may consist of either magnetometers or magnetic compasses.

The mixed sensor unit (b) provides the estimations of $\theta_m{}^*$ and $\theta_g{}^*$ at the same time, thus making it possible to calculate the difference angle $\theta_d = \theta_m{}^* - \theta_g{}^*$.

The difference angle $\theta_d$ is assumed to be constant within the operating range of the distributed heading system. Therefore, $\theta_d$ makes it possible to correct the angle measurements performed by all magnetic/inertial sensor units as follows:

$$\theta_g{}^k = \theta_m{}^k - \theta_d$$

where:

$\theta_g^k$ is the heading angle of each magnetic/inertial sensor unit with respect to the north geographical pole direction.

List of figures

Fig. 1    - Hydrophone array towed by a ship
Fig. 2    -Heading system of distributed arrangement in the hydrophone array
Fig. 3    - Mixed heading sensor unit
Fig. 4    - Magnetic/inertial heading sensor unit
Fig. 5    - Fixed reference system
Fig. 6    - Body reference system
Fig. 7    -Block diagram showing the compensation for heading errors in magnetic/inertial sensor units.

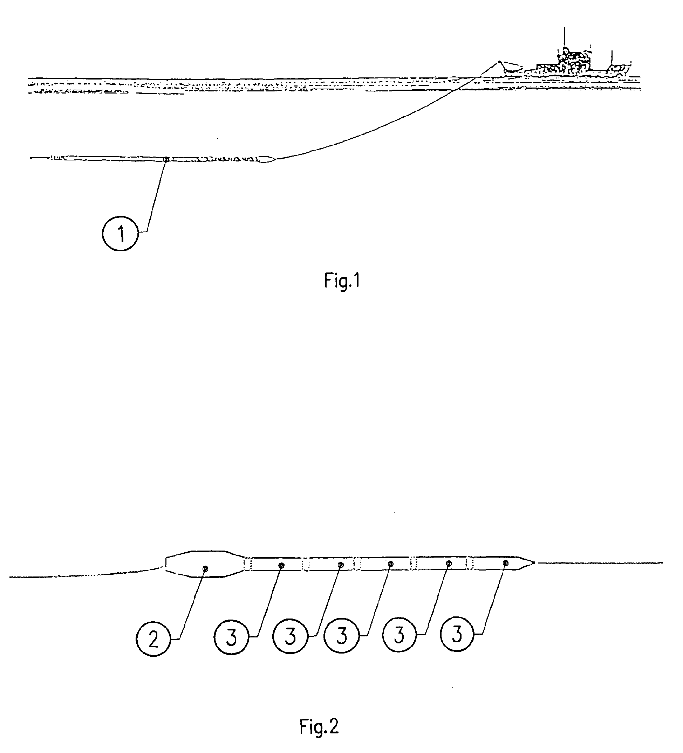

As an example and only for descriptive (but not limiting) purposes, a towed hydrophone array 1 is shown in Fig. 1.

Fig. 2 represents a heading system of distributed design, included in the above-mentioned towed sensor array 1, and comprising a mixed sensor 2 ahead, and n magnetic/inertial sensor units 3.

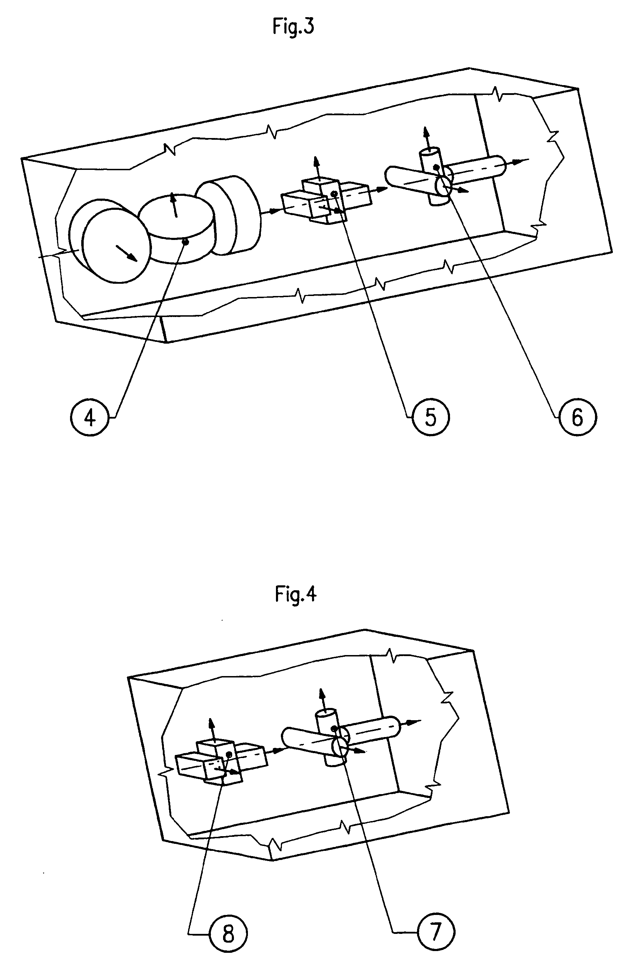

Fig. 3 shows into detail the mixed sensor unit 2. This figure shows three gyroscopic axes 4, three accelerometer axes 5, and three magnetometric axes 6; such triads of axes are fixed with respect to the casing of the sensor unit itself and are in reciprocal alignment.

Fig. 4 shows one of the magnetic/inertial sensor units 3. Each one of these sensor units 3 comprises three magnetometric axes 7 and three accelerometer axes 8. The triads of axes 7 and 8 are fixed with respect to the casing of the sensor and are in reciprocal alignment.

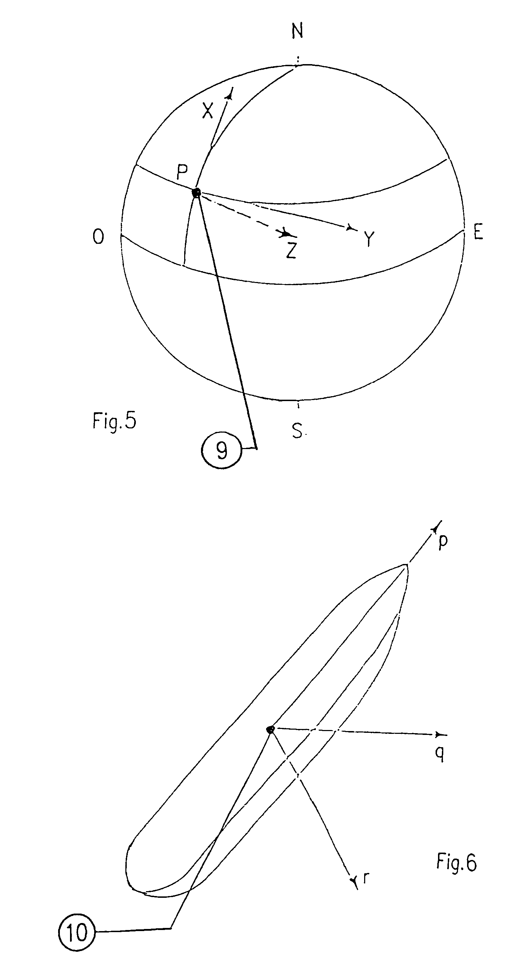

Fig. 5 shows the reference system 9, fixed with respect to the earth.

Fig. 6 shows the body reference system 10.

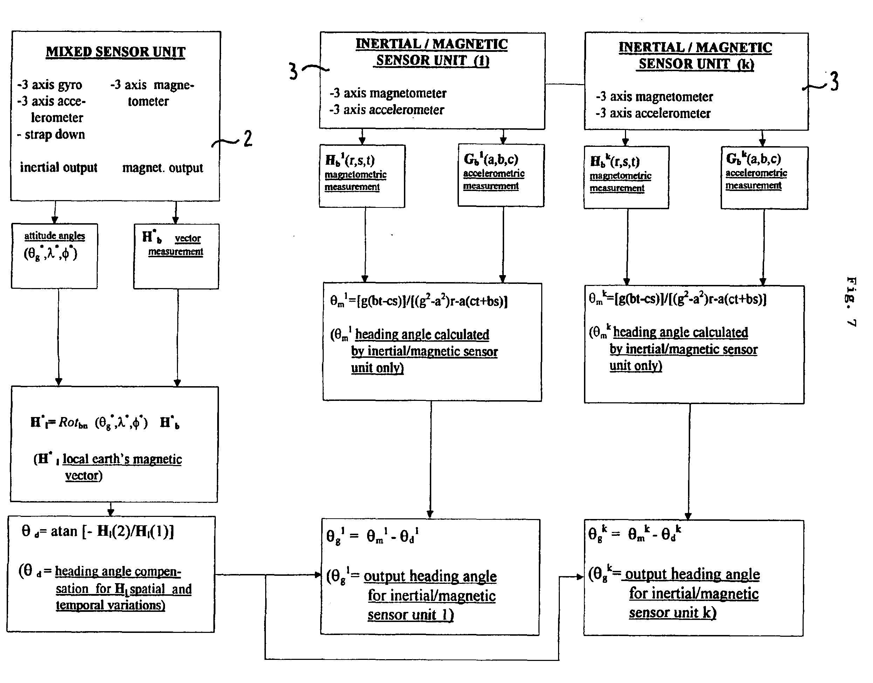

Fig. 7 shows a block diagram of procedure steps required for correction of heading angles of the magnetic/inertial sensor units described hereinafter.

The earth's magnetic field vector H, in the fixed reference system 9, when aligned with the terrestrial meridians, can be written in the form of:

$$H_n = \begin{bmatrix} h_1 \\ 0 \\ h_3 \end{bmatrix}$$

and in the body reference system 10:

$$H_b = \begin{bmatrix} r \\ s \\ t \end{bmatrix} = Rot_{nb}(\theta, \lambda, \varphi) H_n \begin{bmatrix} h_1 \\ 0 \\ h_3 \end{bmatrix}$$

where $Rot_{nb}(\theta, \lambda, \varphi)$ is the rotation matrix according to north, pitch and roll angles $(\theta, \lambda, \varphi)$ respectively, where $\theta$ = angle of rotation around r-axis in Fig. 6, $\lambda$ = angle of rotation around q-axis in Fig.6, and $\varphi$ = angle of rotation around p-axis in Fig. 6, from fixed reference system 9 to body reference system 10.

In the same way $G_n = \begin{bmatrix} 0 \\ 0 \\ g \end{bmatrix}$ is the gravity acceleration vector in the fixed reference system 9 and

$$G_b = \begin{bmatrix} a \\ b \\ c \end{bmatrix} = \mathrm{Rot}_{nb}(\theta, \lambda, \varphi) G_n \begin{bmatrix} 0 \\ 0 \\ g \end{bmatrix}$$

is the same vector in the body reference system 10.

By using the sensors included in the mixed sensor unit 2, we calculate the inertial heading vector, i.e., the triad of angles $(\theta_i{}^*, \lambda_i{}^*, \varphi_i{}^*)$ which are obtained through a strap-down algorithm applied to the inertial sensor outputs. In addition, the earth's magnetic field vector, $\mathbf{H_b^*}$, is measured in the body reference system 10.

Furthermore, it is also possible to calculate the magnetic heading vector $(\theta_m{}^*, \lambda_m{}^*, \varphi_m{}^*)$ using as start point the vectors measured by the magnetometric and accelerometer sensors mounted in the mixed sensor unit 2

$$\mathbf{H_b^*} = \begin{bmatrix} r \\ s \\ t \end{bmatrix} \quad \text{and} \quad \mathbf{G_b^*} = \begin{bmatrix} a \\ b \\ c \end{bmatrix}$$

as follows:

$$[1] \qquad \tan \varphi_m{}^* = \frac{b}{c}$$

$$[2] \qquad \tan \lambda_m{}^* = - \frac{a}{\sqrt{b^2 + c^2}}$$

$$[3] \qquad \tan \theta_m{}^* = \frac{g(bt - cs)}{(g^2 - a^2)r - a(ct + bs)}$$

(g = gravity acceleration)

If there are no alterations arising from earth's magnetic field, we have:

$$\varphi_i{}^* = \varphi_m{}^*$$

$$\lambda_i{}^* = \lambda_m{}^*$$

$$\theta_i{}^* = \theta_m{}^*$$

unless errors have been introduced by the sensors: this implies that the estimation of $\theta_m{}^k$ as obtained from formula [3] above, which is based on the magnetic and accelerometer outputs coming from the k-th sensor unit 3, does not require any compensation. Otherwise, the local vector $H_1$ of the earth's magnetic field is estimated in the fixed reference system 9. To do it, use is made of the inertial heading vector, which is calculated for the mixed sensor unit 2 as follows:

$$H_1^* = \begin{bmatrix} \lambda \\ \beta \\ \delta \end{bmatrix} = Rot_{bn}(\theta_i^*, \lambda_i^*, \varphi_i^*) H_b^* \begin{bmatrix} r \\ s \\ t \end{bmatrix} .$$

where $Rot_{bn}$ is the rotation matrix between body reference system 10 and fixed reference system 9 (inverse matrix of $Rot_{nb}$).

Since module of H and its components $h_1$, $h_3$ are not decisive for the calculation of $\theta_m$, it can always be assumed that $H_1$ has been generated only by a rotation of $\theta_d$ along the Z axis in the fixed reference system 9 ($\theta_d$ being the instantaneous local magnetic declination angle), namely:

$$H_1^* = \begin{bmatrix} \lambda \\ \beta \\ \delta \end{bmatrix} = Rot_{bn}(\theta_i, 0, 0) H_b^* \begin{bmatrix} r \\ s \\ t \end{bmatrix}$$

from which $\theta_d$ can be calculated as follows:

$$\tan \theta_d = -\frac{\beta}{\lambda}$$

The assumption about space correlation of the earth's magnetic field variations among all sensors 2 and 3 leads to the conclusion that angle $\theta_d$ can be used to correct later on the estimations for $\theta_m^k$ coming from all distributed magnetic/inertial sensor units 3.

These estimations are made on the basis of the measurement of the two following vectors:

$$H_b^k = Rot_{nb}(\theta_k, \lambda_k, \varphi_k) Rot_{nb}(\theta_1, 0, 0) H_n \begin{bmatrix} h_1 \\ 0 \\ h_3 \end{bmatrix}$$

$$G_b^k = Rot_{nb}(\theta_k, \lambda_k, \varphi_k) G_n \begin{bmatrix} 0 \\ 0 \\ g \end{bmatrix}$$

On the other hand:

$$G_b^k = Rot_{nb}(\theta_k, \lambda_k, \varphi_k) Rot_{nb}(\theta_d, 0, 0) G_n \begin{bmatrix} 0 \\ 0 \\ g \end{bmatrix}$$

for each $\theta_d$, from which it can be assumed:

$$H_b^k = Rot_{nb}\,(\theta_k + \theta_d, \lambda_k, \varphi_k)\, H_n \begin{bmatrix} h_1 \\ 0 \\ h_3 \end{bmatrix}$$

and:

$$G_b^k = Rot_{nb}\,(\theta_k + \theta_d, \lambda_k, \varphi_k)\, G_n \begin{bmatrix} 0 \\ 0 \\ g \end{bmatrix}$$

Thus, the angles $(\theta_k + \theta_d)$ can be calculated by means of formula [3] and then $\theta_d$ can be subtracted from these estimated values.

## Claims

1. Heading system for measuring the heading angle with respect to the earth's north geographic pole direction, said system comprising at least one sensor unit (2) arranged for determining both local earth's north magnetic pole direction and earth's north geographic pole direction at the same time and a plurality of k magnetic/inertial sensor units (3) arranged for determining the local magnetic north direction only, wherein the heading angles $\theta_g^*$ with respect to the earth's geographic north direction and $\theta_m^*$ with respect to the earth's local magnetic north direction, coming from the values measured by said sensor unit (2), are used to calculate the heading angle $\theta_g^k$ with respect to the earth's geografic north direction from the measurement performed by said k sensor units (3); and the system is suitable for being included in a hydrophone array towed by a ship.

2. Heading system (1) as claimed in claim 1, wherein said sensor unit (2) comprises at least three gyroscopes (4), at least three accelerometers (5) having the same alignment as the gyroscopic axes (4), and at least three magnetometers (6) having the same alignment as the gyroscopic axes (4) and the accelerometer axes (5).

3. Heading system (1) as claimed in claim 2, wherein said sensor unit (2) comprises three gyroscopes (4) along three mutually orthogonal axes, three accelerometers (5) along three mutually orthogonal axes aligned as said gyroscopic axes (4), and three magnetometers (6) along three mutually orthogonal axes aligned with the gyroscopic axes (4) and the accelerometer axes (5).

4. Heading system (1) according to claim 2 or 3, wherein the calculation method used to obtain the k heading angles $\theta_g^k$ with respect to the geographic north comprises the following steps:

   a) calculation of the angles $\theta_g^*$ for north, $\lambda^*$ for pitch, $\varphi^*$ for roll through a strap-down algorithm using the values measured by said gyroscopes (4) and said accelerometers (5);
   b) rotation of the earth's local magnetic field vector $H_b^*$ measured by said magnetometers (6), from body reference system (10) to fixed reference system (9) through said angles $\theta_g^k$, $\lambda^*$ and $\varphi^*$;
   c) calculation of the instantaneous local magnetic declination angle $\theta_d$ through the components of vector $H_1^*$ of local earth's magnetic field in said fixed reference system (9),
   d) calculation of k heading angles $\theta_m^k$ with respect to the earth's magnetic north for each one of said k sensor units (3) through a strap-down algorithm starting from the values measured by said accelerometers (8) and said magnetometers (7) of said k sensor units (3),
   e) calculation of said k angles $\theta_g^k$ with respect to the earth's geographic north for the k sensor units (3), obtained by subtracting said angle $\theta_d$ from said angles $\theta_m^k$.

5. Heading system as claimed in claim 4, wherein step d) of the calculation is replaced by a direct measurement of said k angles $\theta_m^k$ by means of a magnetic gimbal-mounted device.

**Patentansprüche**

1. Navigationssystem zum Messen des Kurswinkels relativ zur geographischen Erdnordpol-Richtung, umfassend wenigstens eine Sensoreinheit (2) zur Bestimmung sowohl der lokalen magnetischen Erdnordpol-Richtung als auch gleichzeitig der geographischen Erdnordpol-Richtung sowie eine Mehrzahl k von magnetischen/inertialen Sensoreinheiten (3) zur Bestimmung nur der lokalen magnetischen Nordrichtung, wobei die Kurswinkel $\theta_g^*$ bezüglich der geographischen Erdnordrichtung und $\theta_m^*$ bezüglich der lokalen magnetischen Erdnordrichtung, die sich aus den durch die Sensoreinheiten (2) gemessenen Werten ergeben, benutzt werden, um den Kurswinkel $\theta_g^k$ bezüglich der geographischen Erdnordrichtung aus der Messung zu errechnen, die durch die k Sensoreinheiten (3) durchgeführt wird, wobei das System in einer von einem Schiff geschleppten Hydrophonanordnung einsetzbar ist.

2. Navigationssystem (1) nach Anspruch 1, **dadurch gekennzeichnet, dass** die Sensoreinheit (2) wenigstens drei Gyroskope (4), wenigstens drei Beschleunigungsmesser (5) mit derselben Ausrichtung wie die Achsen der Gyroskope (4) sowie wenigstens drei Magnetometer (6) aufweist, die dieselbe Ausrichtung wie die Achsen der Gyroskope (4) und der Beschleunigungsmesser (5) haben.

3. Navigationssystem (1) nach Anspruch 2, **dadurch gekennzeichnet, dass** die Sensoreinheit (2) drei Gyroskope (4), die sich auf drei zueinander rechtwinkligen Achsen erstrecken, drei Beschleunigungsmesser (5), die sich auf drei zueinander rechtwinkligen Achsen erstrecken, welche wie die Achsen der Gyroskope (4) ausgerichtet sind, und drei Magnetometer (6) aufweist, welche sich auf drei zueinander rechtwinkligen Achsen erstrecken, die wie die Achsen der Gyroskope (4) und der Beschleunigungsmesser (5) ausgerichtet sind.

4. Navigationssystem (1) nach Anspruch 2 oder 3, **dadurch gekennzeichnet, dass** die Berechnungsmethode zur Bestimmung der k Kurswinkel $\theta_g^k$ bezüglich der geographischen Nordrichtung die folgenden Schritte umfasst:

   a) Berechnung der Winkel $\theta_g^*$ für Nord, $\lambda^*$ für die Steigung, $\varphi^*$ für den Rollwinkel mittels eines bordfesten Strap-Down-Algorithmus, wobei die von den Gyroskopen (4) und den Beschleunigungsmessern (5) ermittelten Werte benutzt werden,
   b) Drehung des lokalen magnetischen Erdfeldvektors $H_b^*$, der durch die Magnetometer (6) gemessen wird, von einem Körperbezugssystem (10) zu einem festen Referenzsystem (9) um die Winkel $\theta_g^k$, $\lambda^*$ und $\varphi^*$,
   c) Berechnung der augenblicklichen lokalen magnetischen Deklinationswinkel $\theta_d$ durch die Komponenten des Vektors $H_1^*$ des lokalen Erdmagnetfeldes in dem festen Referenzsystem (9),
   d) Berechnung der k Kurswinkel $\theta_m^k$ zur magnetischen Erdnordrichtung für jede der k Sensoreinheiten (3) mittels eines Strap-Down-Algorithmus, ausgehend von den Werten, die von den Beschleunigungsmessern (8) und den Magnetometern (7) der k Sensoreinheiten (3) gemessen wurden,
   e) Berechnung der k Winkel $\theta_g^k$ zur geographischen Erdnordrichtung für die k Sensoreinheiten (3), die durch Subtraktion des Winkels $\theta_d$ von den Winkeln $\theta_m^k$ erhalten werden.

5. Navigationssystem (1) nach Anspruch 4, **dadurch gekennzeichnet, dass** Schritt d der Berechnung ersetzt wird durch unmittelbare Messung der k Winkel $\theta_m^k$ mittels einer magnetischen, kardanisch aufgehängten Vorrichtung.

**Revendications**

1. Système de navigation pour mesurer l'angle de cap par rapport à la direction du pôle terrestre nord, comprenant au moins un bloc détecteur (2) pour déterminer aussi bien la direction magnétique locale du pôle terrestre nord que simultanément la direction géographique du pôle terrestre nord, ainsi qu'un nombre k de blocs détecteurs magnétiques/inertiels (3) pour déterminer seulement la direction locale du nord magnétique, les angles de cap $\theta_g^*$ par rapport à la direction géographique du pôle terrestre nord et $\theta_m^*$ par rapport à la direction magnétique locale du pôle terrestre nord, lesquels résultent des valeurs mesurées par les blocs détecteur (2), étant utilisés pour calculer l'angle de cap $\theta_g^k$ par rapport à la direction géographique du pôle terrestre nord à l'aide de la mesure effectuée par les blocs détecteurs k (3), ledit système étant utilisé dans un dispositif hydrophonique tracté par un bateau.

2. Système de navigation (1) selon la revendication 1 **caractérisé par le fait que** le bloc détecteur (2) comprend au moins trois gyroscopes (4), au moins trois accéléromètres (5) avec la même direction que les axes des gyroscopes (4) ainsi qu'au moins trois magnétomètres (6) ayant la même direction que les axes des gyroscopes (4) et des accéléromètres (5).

**3.** Système de navigation (1) selon la revendication 2 **caractérisé par le fait que** le bloc détecteur (2) comprend trois gyroscopes (4) disposés sur trois axes rectangulaires, trois accéléromètres (5) disposés sur trois axes rectangulaires ayant la même direction que les axes des gyroscopes (4) et trois magnétomètres (6) disposés sur trois axes rectangulaires ayant la même direction que les axes des gyroscopes (4) et des accéléromètres (5).

**4.** Système de navigation (1) selon la revendication 2 ou 3 **caractérisé par le fait que** la méthode de calcul pour déterminer les angles de cap k $\theta_g^k$ par rapport à la direction géographique nord comprend les étapes suivantes :

a) calcul des angles $\theta_g^*$ pour le nord, $\lambda^*$ pour la pente, $\varphi^*$ pour l'angle de roulis au moyen d'un algorithme strap-down, en utilisant les valeurs déterminées par les gyroscopes (4) et les accéléromètres (5),
b) rotation du vecteur de champ magnétique terrestre local $H_b^*$ calculé par les magnétomètres (6), rotation du vecteur autour des angles $\theta_g^*$, $\lambda^*$, $\varphi^*$ d'un système de référence d'objet (10) en un système de référence fixe (9),
c) calcul des angles instantanés de déclinaison magnétique locale $\theta_d$ à l'aide des composants du vecteur $H_1^*$ du champ magnétique terrestre local dans le système de référence fixe (9),
d) calcul des angles de cap k $\theta_m^k$ par rapport à la direction magnétique du pôle terrestre nord pour chacun des blocs détecteurs k (3) au moyen de l'algorithme strap-down, sur la base des valeurs mesurées par les accéléromètres (8) et les magnétomètres (7) des blocs détecteurs k (3),
e) calcul des angles k $\theta_g^*$ par rapport à la direction géographique du pôle terrestre nord pour les blocs détecteurs k (3), obtenus en soustrayant l'angle $\theta_d$ des angles $\theta_m^k$.

**5.** Système de navigation (1) selon la revendication 4 **caractérisé par le fait que** l'étape d du calcul est remplacée par la mesure directe des angles k $\theta_m^k$ au moyen d'un dispositif magnétique à suspension à cardan.

Fig.1

Fig.2

## Fig.3

## Fig.4

Fig.5

Fig.6

**MIXED SENSOR UNIT**

-3 axis gyro
-3 axis acce-
  lerometer
- strap down

-3 axis magne-
  tometer

~ 2

inertial output    magnet. output

attitude angles
$(\theta_g^{\ *}, \lambda^*, \phi^*)$

$\mathbf{H}_b^{\ \bullet}$  vector
measurement

$\mathbf{H}_l^{\ \bullet} = Rot_{bn} \ (\theta_g^{\ *}, \lambda^*, \phi^*) \ \mathbf{H}_b^{\ \bullet}$

($\mathbf{H}_l^{\ \bullet}$ local earth's magnetic
vector)

$\theta_d = atan \ [- \mathbf{H}_l(2)/\mathbf{H}_l(1)]$

($\theta_d$ = heading angle compen-
sation for $\mathbf{H}_l$ spatial and
temporal variations)

**INERTIAL / MAGNETIC
SENSOR UNIT  (1)**

3 ~

-3 axis magnetometer
-3 axis accelerometer

$\mathbf{H}_b^{\ 1}(r,s,t)$
magnetometric
measurement

$\mathbf{G}_b^{\ 1}(a,b,c)$
accelerometric
measurement

$\theta_m^{\ 1} = [g(bt-cs)]/[(g^2-a^2)r-a(ct+bs)]$

($\theta_m^{\ 1}$ heading angle calculated
by inertial/magnetic sensor
unit only)

$\theta_g^{\ 1} = \theta_m^{\ 1} - \theta_d^{\ 1}$

($\theta_g^{\ 1}$ = output heading angle
for inertial/magnetic
sensor unit 1)

**INERTIAL / MAGNETIC
SENSOR UNIT  (k)**

~ 3

-3 axis magnetometer
-3 axis accelerometer

$\mathbf{H}_b^{\ k}(r,s,t)$
magnetometric
measurement

$\mathbf{G}_b^{\ k}(a,b,c)$
accelerometric
measurement

$\theta_m^{\ k} = [g(bt-cs)]/[(g^2-a^2)r-a(ct+bs)]$

($\theta_m^{\ k}$ heading angle calculated
by inertial/magnetic sensor
unit only)

$\theta_g^{\ k} = \theta_m^{\ k} - \theta_d^{\ k}$

($\theta_g^{\ k}$ = output heading angle
for inertial/magnetic
sensor unit k)

Fig. 7

12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5075693 A
- US 4870602 A

- US 4945647 A